# EUROPÄISCHE PATENTSCHRIFT

(11) **EP 1 062 870 B1**
(45) Veröffentlichungstag und Bekanntmachung des Hinweises auf die Patenterteilung: **22.01.2003**
(21) Anmeldenummer: 00109839.1
(22) Anmeldetag: 10.05.2000
(51) Int. Cl.: A01N 1/02

(54) **Perfusionssystem für menschliche oder tierische Organe oder Körperteile**
Perfusion system for human or animal organs or body parts
Système de perfusion pour organes ou parties du corp humain ou animal

(30) Priorität: 22.06.1999 DE 19928485
(43) Veröffentlichungstag der Anmeldung: 27.12.2000
(73) Patentinhaber: Jostra AG, 72145 Hirrlingen (DE)
(72) Erfinder: Schön, Michael, Dr., 13503 Berlin (DE); Germeroth, Frank, 72074 Tübingen (DE); Coscia, Claudio, 60594 Frankfurt/Main (DE)
(74) Vertreter: Möbus, Daniela, Dr.-Ing.

(56) Entgegenhaltungen:
- GB-A- 1 422 356
- PATENT ABSTRACTS OF JAPAN vol. 014, no. 318 (C-0738), 9. Juli 1990 (1990-07-09) & JP 02 111701 A (OLYMPUS OPTICAL CO LTD), 24. April 1990 (1990-04-24)

## Beschreibung

Menschliche Spenderorgane und auch tierische Organe, die zur überbrückung bis zur Verfügbarkeit eines Spenderorgans eingesetzt werden, werden bis jetzt kühl gelagert. Dies bedingt durch den reduzierten Stoffwechsel ein allmähliches Absterben des Organs. Die maximal mögliche Lagerungsdauer bei Erhaltung der vollen Funktionsfähigkeit beträgt deshalb nur drei Tage, sodass bei einer Transplantation Eile geboten ist. Wenn das Organ auf einer Fläche aufliegt, beeinträchtigt ihr Eigengewicht die Durchblutung der aufliegenden Partien, woraus eine Schädigung des Organs resultiert.

JP-A-2111701 beschreibt Lagersysteme für Spenderorgane, worin ein das Organ und eine protektive Flüssigkeit enhaltender Beutel in einer inneren, eine magnetische Flüssigkeit enthaltenden Kammer suspendiert ist.

GB-A-1422356 beschreibt einen Apparat zur Lagerung von Organen, z.B.Nieren, wobei die ieren auf einem Filterbett in einer Flüssigkeit liegen.

Die Erfindung hat die Aufgabe, die bisher bekannten Lagerungszeiten für menschliche oder tierische Organe oder Körperteile zu verlängern.

Die Erfindung löst die gestellte Aufgabe durch ein Perfusionssystem für menschliche oder tierische Organe oder Körperteile, insbesondere für eine Leber, mit Einrichtungen zur Blutversorgung des oder der Organe oder Körperteile sowie mindestens einer Aufnahmevorrichtung für das oder die Organe oder Körperteile, die aus einem inneren Beutel und einem äußeren Beutel besteht, wobei der innere Beutel das Organ oder Körperteil umschließt und in einer im äußeren Beutel enthaltenen Flüssigkeit gelagert ist. Durch die Verwendung zweier ineinander liegender Beutel mit einer schwimmenden Lagerung des Organs existiert keine die Perfusion behindernde definierte Auflagefläche. Das Organ oder Körperteil kann somit vollständig von Blut durchströmt werden, d. h. in einer den natürlichen Bedingungen nahe kommenden Art und Weise gelagert werden. Die Lagerungszeiten lassen sich dadurch erheblich steigern.

Damit eine Perfusion des von den beiden Beuteln umschlossenen Organs oder Körperteils möglich ist, können im inneren Beutel Leitungen zum Anschluss des Organs oder Körperteils an die Einrichtung zur Blutversorgung und/oder anderer Einrichtungen angeordnet und durch beide Beutel nach außen geführt sein.

Die Leitungen können mit den Beuteln verschweißt sein. Auf diese Weise sind die Schläuche fest mit den Beuteln verbunden, sodass die Schläuche nicht versehentlich aus dem Organ herausgezogen werden können, und der Durchtritt der Schläuche durch die Beutel dicht ist.

Um einen problemlosen Anschluss an das Organ oder Körperteil zu ermöglichen, können die Leitungsenden im Beutel mit Luer-Lock-Anschlüssen versehen sein.

Damit die Flüssigkeit im Außenbeutel zu- und abfließen kann, bzw. pulsierend in den Beutel eingepumpt werden kann, um eine Druckentlastung bzw. Massage des Organs oder Körperteils zu ermöglichen, kann der äußere Beutel mindestens einen Zufluss und einen Abfluss für die Flüssigkeit aufweisen. Somit ahmt die pulsierende und damit das Organ massierende Flüssigkeit im Falle einer Leber die Massage durch das Zwerchfell nach.

Damit man die Beutel jederzeit wieder öffnen kann, um eventuelle Korrekturen vorzunehmen, ohne dabei das Organ oder das Körperteil dekonnektieren zu müssen, kann der Innen- und der Außenbeutel mittels einer Klemmleiste verschlossen werden. Außerdem dient die Klemmleiste auf der Vorderseite zusammen mit der Verschweißung der Schläuche und dem Außenbeutel dazu, die Position des Innenbeutels zu fixieren.

Dadurch, dass der Außenbeutel seitlich in einem Rahmen hängend eingespannt sein kann, hat das im Innenbeutel umschlossene Organ oder Körperteil keine Möglichkeit, auf einer festen Auflagefläche zu ruhen, wodurch die Lagerungszeit reduziert würde.

Die Temperatur der Flüssigkeit im Außenbeutel kann im Bereich der Körpertemperatur liegen. Dadurch können aufwendige Kühlsysteme, wie sie bisher benötigt werden, entfallen.

Falls das Perfusionssystem für eine Leber eingesetzt wird, können die Leitungen des Innenbeutels zum Anschluss der Leberarterie, der Pfortader, der Lebervene, des Gallengangs, zur Entlüftung des Innenbeutels und als weiterer Zugang, beispielsweise für Messsonden, dienen.

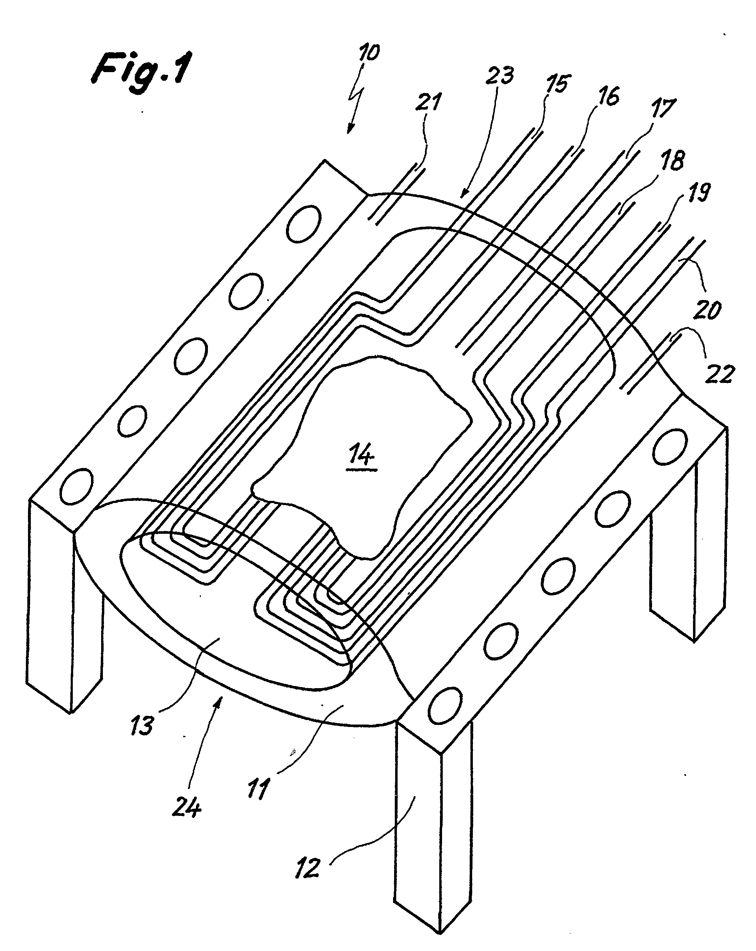

Nachfolgend wird ein Ausführungsbeispiel eines erfindungsgemäß ausgebildeten Perfusionssystems für menschliche oder tierische Organe oder Körperteile anhand der beiliegenden Zeichnung näher erläutert.

Die einzige Figur zeigt eine perspektivische Ansicht einer Aufnahmevorrichtung 10 für menschliche oder tierische Organe oder Körperteile. Ein Außenbeutel 11 ist seitlich in einen Rahmen 12 hängend eingespannt. In dem Außenbeutel 11 ist ein Innenbeutel 13 und eine hier nicht näher dargestellte, den Außenbeutel 11 umgebende Flüssigkeit enthalten. Der Innenbeutel 13 enthält das zu lagernde Organ oder Körperteil 14. Im Innenbeutel 13 sind Leitungen 15, 16, 17, 18, 19, 20 zum Anschluss des Organs oder Körperteils an Einrichtungen zur Blutversorgung und/oder anderer Einrichtungen angeordnet und durch beide Beutel 11 und 13 nach außen geführt. Vorzugsweise sind die Leitungen 15 bis 20 mit dem Beutel verschweißt und der Beutel an der Durchtrittsseite 23 zugeschweißt. Somit ist sichergestellt, dass der Beutel an der Seite 23 zuverlässig dicht und gegen ein Herausziehen der Schläuche 15 bis 20 gesichert ist. Im Falle eines Leberperfusionsgerätes können diese Leitungen 15 bis 20 zum Anschluss der Leberarterie, der Pfortader, der Lebervene, des Gallenganges, der Entlüftung des Innenbeutels und als weiterer Zugang, beispielsweise für Messsonden, dienen. Der äußere Beutel 11 weist Leitungen 21 und 22 für den Zufluss und den Abfluss der den Innenbeutel 13 umgebenden Flüssigkeit auf. Die Flüssigkeit dient der schwimmenden Lagerung des Organs oder Körperteils 14 und kann auch - durch pulsierendes Ein- und Ausströmen aus dem äußeren Beutel 11 - zur Massage des Organs oder Körperteils 14 eingesetzt werden. An der Stirnseite 24 des Außenbeutels 11 ist eine öffenbare hier nicht näher dargestellte Klemmleiste anbringbar. Dadurch kann der Außenbeutel 11 zum Anschluss des Organs oder zu Korrekturen der Anschlüsse geöffnet und anschließend wieder verschlossen werden.

## Patentansprüche

1. Perfusionssystem für menschliche oder tierische Organe oder Körperteile (14), insbesondere für eine Leber, mit Einrichtungen zur Blutversorgung des oder der Organe oder Körperteile (14) sowie mindestens einer Aufnahmevorrichtung (10) für das oder die Organe oder Körperteile (14), die aus einem inneren Beutel (13) und einem äußeren Beutel (11) besteht, wobei der innere Beutel (13) das Organ oder Körperteil (14) umschließt und in einer im äußeren Beutel (11) enthaltenen Flüssigkeit gelagert ist.

2. Perfusionssystem nach Anspruch 1, **dadurch gekennzeichnet, dass** im inneren Beutel (13) Leitungen (15, 16, 17, 18, 19, 20) zum Anschluss des Organs oder Körperteils (14) an die Einrichtung zur Blutversorgung und/oder anderer Einrichtungen angeordnet und durch beide Beutel (11, 13) nach außen geführt sind.

3. Perfusionssystem nach Anspruch 1 oder 2, **dadurch gekennzeichnet, dass** die Leitungen (15, 16, 17, 18, 19, 20, 21, 22) mit den Beuteln (11, 13) verschweißt sind.

4. Perfusionssystem nach einem der Ansprüche 1 bis 3, **dadurch gekennzeichnet, dass** die Leitungsenden im Beutel (11, 13) mit Luer-Lock-Anschlüssen versehen sind.

5. Perfusionssystem nach einem der Ansprüche 1 bis 4, **dadurch gekennzeichnet, dass** der äußere Beutel (11) mindestens einen Zufluss (21) und einen Abfluss (22) für die Flüssigkeit aufweist.

6. Perfusionssystem nach einem der Ansprüche 1 bis 5, **dadurch gekennzeichnet, dass** der Innenbeutel (13) und der Außenbeutel (11) mittels einer Klemmleiste verschließbar ist.

7. Perfusionssystem nach einem der Ansprüche 1 bis 6, **dadurch gekennzeichnet, dass** der Außenbeutel (13) seitlich in einem Rahmen (12) hängend eingespannt ist.

8. Perfusionssystem nach einem der Ansprüche 1 bis 7, **dadurch gekennzeichnet, dass** die Temperatur der Flüssigkeit im Außenbeutel (11) im Bereich der Körpertemperatur liegt.

9. Perfusionssystem für eine Leber, nach einem der Ansprüche 2 bis 8, **dadurch gekennzeichnet, dass** die Leitungen des Innenbeutels zum Anschluss der Leberarterie, Pfortader, Lebervene, des Gallengangs, zur Entlüftung des Innenbeutels (13) und als weiterer Zugang, beispielsweise für Messsonden, dienen.

## Claims

1. Perfusion system for human or animal organs or body parts (14), more particularly for a liver, comprising devices for supplying blood to the organ or organs or body parts (14), and at least one receptacle (10) for the organ(s) or body parts (14) which consists of an inner bag (13) and an outer bag (11), the inner bag (13) enveloping the organ or body part (14) and being stored in a fluid contained in the outer bag (11).

2. Perfusion system according to claim 1, **characterised in that** arranged in the inner bag (13) are lines (15, 16, 17, 18, 19, 20) for connecting the organ or body part (14) to the device for supplying blood and/or other devices, and said lines are led to the outside through both bags (11, 13).

3. Perfusion system according to claim 1 or 2, **characterised in that** the lines (15, 16, 17, 18, 19, 20, 21, 22) are welded to the bags (11, 13).

4. Perfusion system according to any of claims 1 to 3, **characterised in that** the ends of the lines in the bag (11, 13) are provided with Luer's locking connectors.

5. Perfusion system according to any of claims 1 to 4, **characterised in that** the outer bag (11) incorporates at least one inflow (21) and one outflow (22) for the fluid.

6. Perfusion system according to any of claims 1 to 5, **characterised in that** the inner bag (13) and the outer bag (11) are adapted to be sealed by means of a clamping strip.

7. Perfusion system according to any of claims 1 to 6, **characterised in that** the outer bag (13) is suspended sideways in a frame (12).

8. Perfusion system according to any of claims 1 to 7, **characterised in that** the temperature of the fluid in the outer bag (11) is around body temperature.

9. Perfusion system for a liver, as claimed in any of claims 2 to 8, **characterised in that** the lines of the inner bag are used to connect to the hepatic artery, portal vein, hepatic vein, bile duct, to ventilate the inner bag (13) and as an additional inlet, for instance for measurement probes.

## Revendications

1. Système de perfusion pour organes ou parties corporelles (14) humains ou animaux, en particulier pour le foie, comportant des dispositifs pour alimenter en sang le ou les organes ou parties corporelles (14) ainsi qu'au moins un dispositif récepteur (10) pour le ou les organes ou parties corporelles (14), qui est constitué d'une poche interne (13) et d'une poche externe (11), la poche interne (13) enfermant l'organe ou la partie corporelle (14) et étant placée dans un liquide contenu dans la poche externe (11).

2. Système de perfusion selon la revendication 1, **caractérisé en ce qu'**à l'intérieur de la poche interne (13), des conduits (15, 16, 17, 18, 19, 20) sont disposées pour raccorder l'organe ou la partie corporelle (14) au dispositif d'alimentation en sang et/ou à d'autres dispositifs, et passent vers le haut à travers les deux poches (11, 13).

3. Système de perfusion selon la revendication 1 ou 2, **caractérisé en ce que** les conduits (15, 16, 17, 18, 19, 20, 21, 22) sont soudés avec les poches (11, 13).

4. Système de perfusion selon l'une des revendications 1 à 3, **caractérisé en ce que** les extrémités des conduits dans la poche (11, 13) sont pourvues de raccords luer-lock.

5. Système de perfusion selon l'une des revendications 1 à 4, **caractérisé en ce que** la poche externe (11) comporte au moins une arrivée (21) et un départ (22) pour le liquide.

6. Système de perfusion selon l'une des revendications 1 à 5, **caractérisé en ce que** la poche interne (13) et la poche externe (11) peuvent être fermées au moyen d'une barrette de serrage.

7. Système de perfusion selon l'une des revendications 1 à 6, **caractérisé en ce que** la poche externe (13) est serrée en position suspendue sur le côté, dans un cadre (12).

8. Système de perfusion selon l'une des revendications 1 à 7, **caractérisé en ce que** la température du liquide dans la poche externe (11) est de l'ordre de la température corporelle.

9. Système de perfusion pour un foie selon l'une des revendications 2 à 8, **caractérisé en ce que** les conduits de la poche interne servent à raccorder les artères du foie, la veine porte, la veine du foie, le canal cholédoque, pour purger l'air de la poche intérieure (13) et comme autre accès, par exemple pour des sondes de mesure.
